# EUROPÄISCHE PATENTSCHRIFT

(11) **EP 2 852 949 B1**
(45) Veröffentlichungstag und Bekanntmachung des Hinweises auf die Patenterteilung: **26.02.2020**
(21) Anmeldenummer: 12799192.5
(22) Anmeldetag: 12.12.2012
(51) Int. Cl.: G10D 13/02

(54) **PARABOLOIDES SCHLAGINSTRUMENT**
PARABOLOIDAL PERCUSSION INSTRUMENT
INSTRUMENT DE PERCUSSION PARABOLIQUE

(30) Priorität: 20.05.2012 DE 102012104332
(43) Veröffentlichungstag der Anmeldung: 01.04.2015
(73) Patentinhaber: Salomon, Gerhard, 91126 Schwabach (DE)
(72) Erfinder: Salomon, Gerhard, 91126 Schwabach (DE)
(74) Vertreter: Fleuchaus, Michael A.
(86) Internationale Anmeldenummer: PCT/EP2012/075191
(87) Internationale Veröffentlichungsnummer: WO 2013/174459

(56) Entgegenhaltungen:
- WO-A1-2009/012503
- US-A- 2 858 724
- US-A- 4 616 551
- US-A1- 2006 272 475
- US-B1- 7 282 633
- Kasin Hunter: "Drums by Kasin Hunter", , 15. Juni 2006 (2006-06-15), Seiten 1-5, XP055058609, Gefunden im Internet: URL:http://kasinhunter.tripod.com/drums200 1Row1.html [gefunden am 2013-04-05]
- "Hourglass Drum", , 13. Mai 2011 (2011-05-13), Seite 1, XP055058604, Gefunden im Internet: URL:http://en.wikipedia.org/wiki/Hourglass _drum [gefunden am 2013-04-05]
- "About the Djembe Drum", , 12. Mai 2012 (2012-05-12), Seiten 1-4, XP055058503, Gefunden im Internet: URL:https://www.djembedirect.com/about/dje mbe.html#history [gefunden am 2013-04-04]

## Beschreibung

### Technisches Gebiet

### Technisches Gebiet

Die Erfindung richtet sich auf ein Schlaginstrument im einfachsten Fall ähnlich der Form einer Djembe, mit einem oder mehreren starr verbundenen Resonanzkörpern in der Form von elliptischen Paraboloiden {1}, welche sich in ihren Brennpunkten {F} treffen.

### Stand der Technik

### Zugrundeliegender Stand der Technik

Beim Stand der Technik (vgl. z. B. die DE 102009008755 A1) ist üblicherweise eine Trommel in der Form einer Djembe mit einer Fellfläche als Schlagfläche ausgestattet. Der Resonanzkörper hat eine mehr oder weniger kesselartige Form. Die Schallaustrittsöffnung hat meist eine trichterartige oder hyperboloide Form. Ebenfalls bekannt im Stand der Technik sind sogenannte "Sanduhrtrommeln", die zwei Schlagflächen und einen, in der Mitte taillierten, Resonanzkörper aufweisen (vgl. z. B. den Internetartikel "Drums by Kasin Hunter, 2001" unter der URL: http://kasinhunter.tripod.com/drums2001 Row1.html oder die Wikipedia-Internetseite "Hourglass Drum" unter der URL: http://en.wikipedia.org/wiki/ Hourglass_drum). Andere Trommeln haben zylindrische Formen. Bei der neuen Trommel ist die jeweilige Form der Resonanzkörper und auch der Schallaustrittsöffnung durch einen elliptischen Paraboloiden vorgegeben. Die Schlagflächen können sich auch auf beiden Seiten befinden, wie bei vielen anderen Trommeln üblich.

### Offenbarung der Erfindung

### Technische Aufgabe

### Technisches Problem

Aufgabe der Erfindung ist es, ein Schlaginstrument mit einem gesteigerten Klangerlebnis zu schaffen.

### Technische Lösung

### Technische Lösung

Diese Aufgabe ist erfindungsgemäß gelöst durch ein Instrument mit dem im Patentanspruch 1 genannten Merkmalen.

Eine vorteilhafte Ausgestaltung der Erfindung ist im Patentanspruch 2 angegeben. Es können nun mehrere dieser Paraboloiden mit verschiedenen (oder auch gleichen) Größen verwendet werden. Ihnen allen gemeinsam ist ihr jeweiliger Brennpunkt {F}. Die Ausbreitung der Schallwellen wird durch die paraboloide Ausgestaltung der Resonanzkörper zielgerichtet derart reflektiert, dass sich diese zunächst in einem Brennpunkt {F} punktförmig bündeln. Diese nun punktförmige Schallquelle ist nun der gemeinsame Ausgangspunkt im Brennpunkt der anderen Paraboloiden. Von dort wird der Schall nun auch in die anderen Paraboloiden reflektiert. Die Schlagflächen {2} können sich auf mehreren Seiten, oder auf nur einer Seite des sich dabei ergebenden Gesamtkörpers {1} befinden. Eine Abstimmung der verschiedenen Größenverhältnisse der Resonanzkörper zueinander ist beliebig. Bevorzugt sind jedoch in einem harmonischen akustischen Verhältnis zueinander stehende Varianten zu verwenden, da sich die entstehenden Klangräume auch gegenseitig beeinflussen, was auch so beabsichtigt ist. Durch diese besondere Form ist ein ganz neuer Klang möglich.

Die Resonanzkörper können zum Beispiel aus Metall, Keramik, Holz, Stein, Glas, Verbundstoffen, glasfaserverstärktem Kunststoff, Acryl oder anderen geeigneten Stoffen gefertigt sein, welche den Schall reflektieren und hemmen. Auch ist es möglich, die Resonanzräume aus einem Block zusammenhängenden Materials herauszuarbeiten.

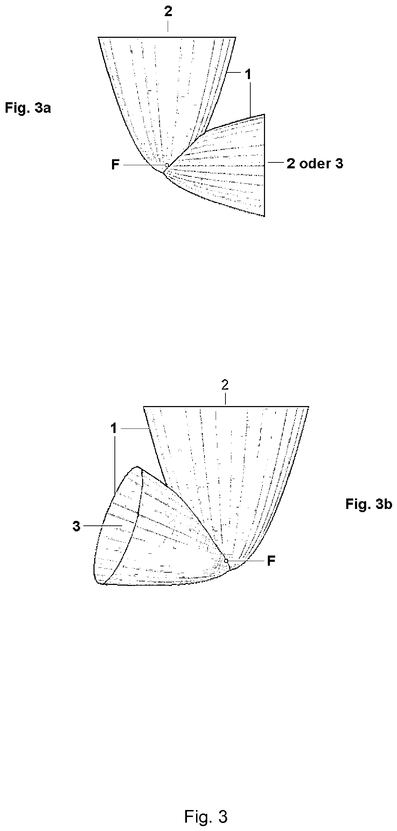

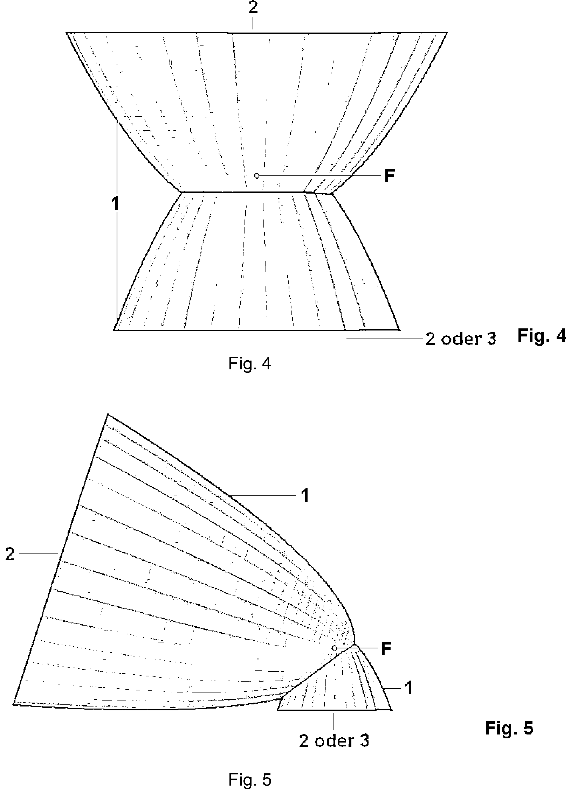

Sofern Schallaustrittsöffnungen {3} erwünscht sind, können sich deren Resonanzkörper ebenfalls in einem beliebigen Winkel zu den anderen befinden. Beispiele dieser Ausführungsart sind in Fig. 3a und 3b und in Fig. 5 zu sehen. So kann der entstehende Schall zum Beispiel gezielt in Richtung des Publikums oder auf eine externe Schallaufnahmevorrichtung gelenkt werden.

Bei den Schlagflächen {2} kann es sich um Natur- oder Kunstfelle (Häute, Folien, Membrane usw.) oder dünne Platten aus jedwedem geeigneten Material (Blech, Plastik, Holz usw.) handeln. Die Schlagflächen können durch Anschlagen mit der Hand, mit mechanischen Hilfsmitteln, oder anderweitig zum Schwingen und somit zur Schallerzeugung gebracht werden.

### Vorteilhafte Wirkungen

### Vorteilhafte Wirkungen

### Zusätzliche Ausführungsarten

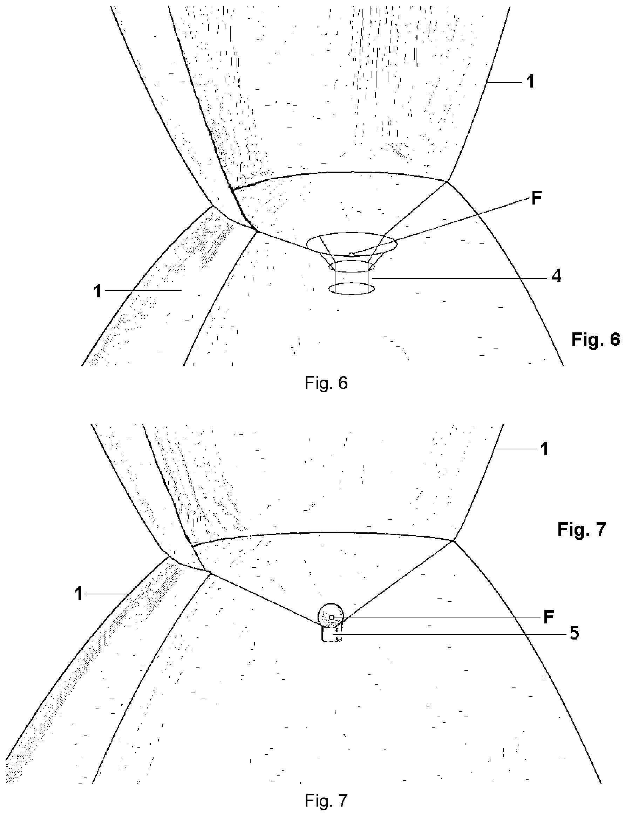

Eine weitere Ausgestaltung der Erfindung ist in Patentanspruch 3 angegeben. In den jeweiligen Brennpunkt können als Zusatz Schallabgabeeinrichtungen in Form kleiner Lautsprecher {4} platziert werden, welche Töne oder Musik wiedergeben. Durch die besondere Form der Trommel können diese Töne durch Schlagen auf die Schlagfläche(n) oder Dämpfen derselben moduliert werden, was einen sehr besonderen Klangeffekt erzeugt. In Fig. 6 ist eine exemplarische Schnitt-Darstellung mit einem Lautsprecher {4} als Schallquelle im Brennpunkt {F} gegeben.

Als weitere Ausgestaltung der Erfindung sind kleine Rasseln, Glöckchen oder schwingende Teile im oder nahe des Brennpunktes {F} angebracht, da sie dort durch den entstehenden konzentrierten Klangknoten stark zum Mitschwingen angeregt werden können und daher als Schallquelle wie ein Lautsprecher {4} dienen.

Eine weitere Ausgestaltung der Erfindung ist, dass man im Brennpunkt ein Mikrofon {5} oder eine andere Schallaufnahmeeinrichtung platziert, um die dort entstehenden Schallwellen entweder mechanisch (Schlauch, Rohr) oder elektronisch auszuleiten und gegebenenfalls, etwa an einen Verstärker oder ein Effektgerät, weiterzuleiten. Diese Variante ist in Fig. 7 exemplarisch als Schnittdarstellung mit einem Mikrofon dargestellt.

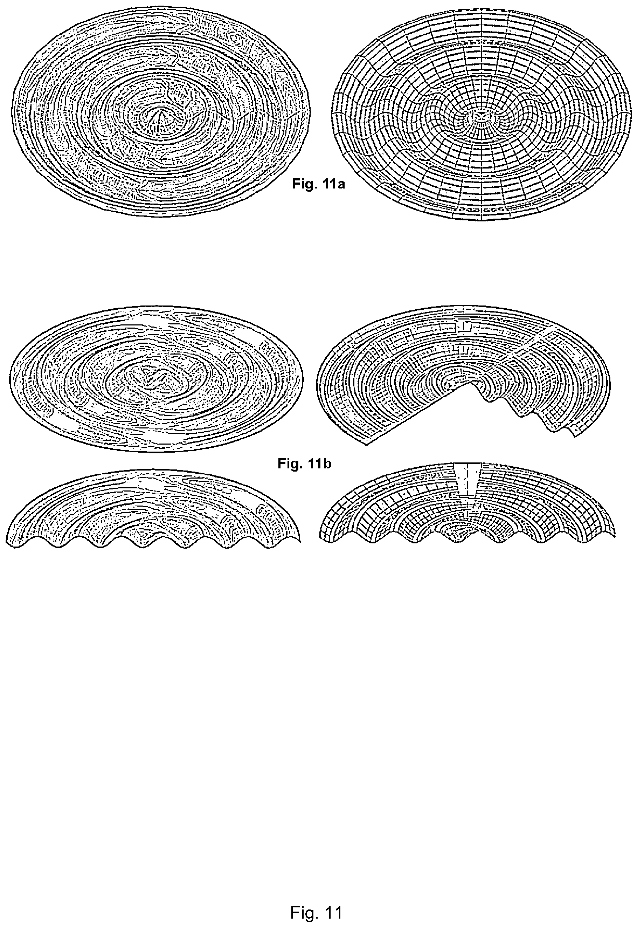

Eine weitere vorteilhafte Ausgestaltung der Erfindung ist im Patentanspruch 4 gegeben. In Abwandlung zur Fellgestaltung kann es sich bei dieser Schlagfläche {2} auch um eine andere, dreidimensionale Form handeln, welche man zum Beispiel mittels tiefgezogenem Kunststoff oder Blech formen kann. Darunter seien zum Beispiel, jedoch nicht ausschließlich, Wellenmuster oder konkave/konvexe Flächen zu verstehen. Einige Beispiele sind in Fig. 11a und 11b aufgezeigt.

Eine Verwendung ohne jegliche Zusatzgeräte ist der nicht ausschließliche Hauptverwendungszweck.

### Kurze Beschreibung des Zeichnungen

### Beschreibung der Zeichnungen

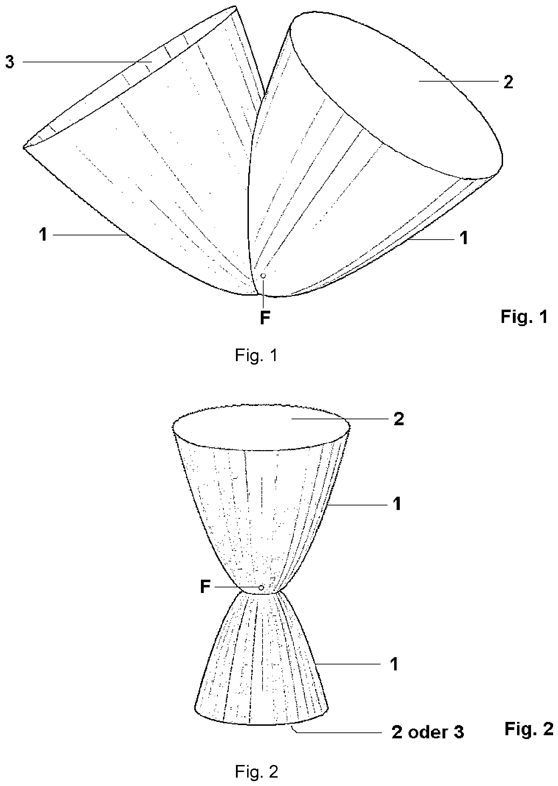

Fig. 1: zeigt eine abgewinkelte Variante mit zwei Paraboloiden {1}, einer Schlagfläche {2} und einer Schallaustrittsöffnung {3} mit dem gemeinsamen Brennpunkt {F}.
Fig. 2: zeigt eine Variante mit zwei Paraboloiden {1} in unterschiedlichen Größen, einer Schlagfläche {2} und einer Schallaustrittsöffnung {3}. Diese kann auch als weitere Schlagfläche {2} ausgebildet sein. Der gemeinsame Brennpunkt ist mit {F} dargestellt.
Fig. 3a und 3b: zeigt zwei abgewinkelte Varianten mit zwei Paraboloiden { 1} in unterschiedlichen Größen, einer Schlagfläche {2} und einer Schallaustrittsöffnung {3}. Diese kann auch als weitere Schlagfläche {2} ausgebildet sein. Der gemeinsame Brennpunkt ist mit {F} dargestellt.
Fig. 4: zeigt eine Variante mit zwei Paraboloiden {1} in unterschiedlichen Größen, einer Schlagfläche {2} und einer Schallaustrittsöffnung {3}. Diese kann auch als weitere Schlagfläche {2} ausgebildet sein. Der gemeinsame Brennpunkt ist mit {F} dargestellt.
Fig. 5: zeigt eine Variante mit zwei Paraboloiden {1} in unterschiedlichen Größen, einer Schlagfläche {2} und einer Schallaustrittsöffnung {3}. Diese kann auch als weitere Schlagfläche {2} ausgebildet sein. Der gemeinsame Brennpunkt ist mit {F} dargestellt.
Fig. 6: zeigt einen Schnitt durch eine Variante mit zwei Paraboloiden {1} in unterschiedlichen Größen, dem gemeinsamen Brennpunkt {F} und einer dort angebrachten Schallquelle {4}.
Fig. 7: zeigt einen Schnitt durch eine Variante mit zwei Paraboloiden {1} in unterschiedlichen Größen, dem gemeinsamen Brennpunkt {F} und einer dort angebrachten Schallaufnahmeeinrichtung {5}.

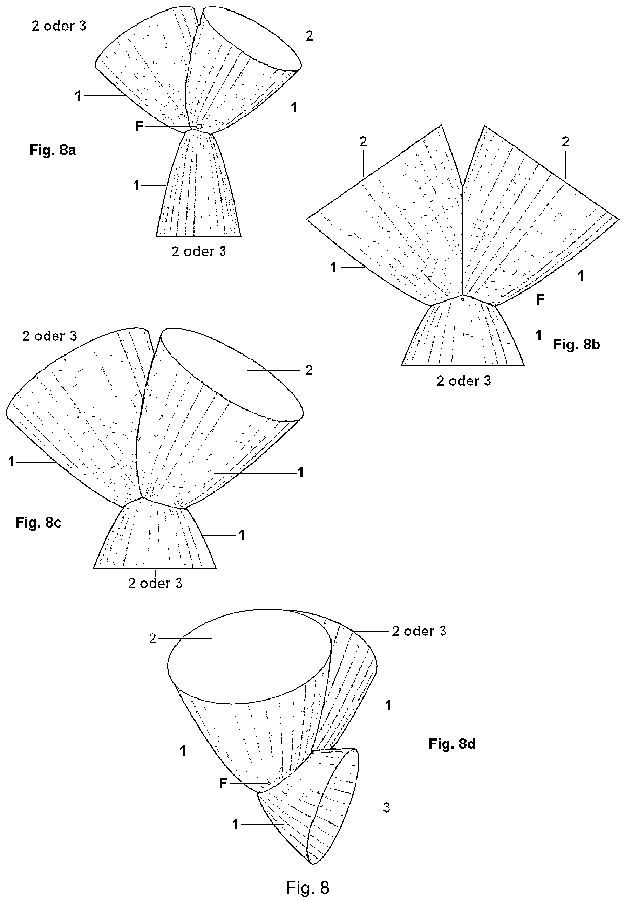

Fig. 8a bis 8d: zeigt mehrere Varianten mit drei Paraboloiden {1} in unterschiedlichen Größen, zwei Schlagflächen {2} und einer Schallaustrittsöffnung {3}. Diese kann auch als weitere Schlagfläche {2} ausgebildet sein. Der gemeinsame Brennpunkt ist mit {F} dargestellt.

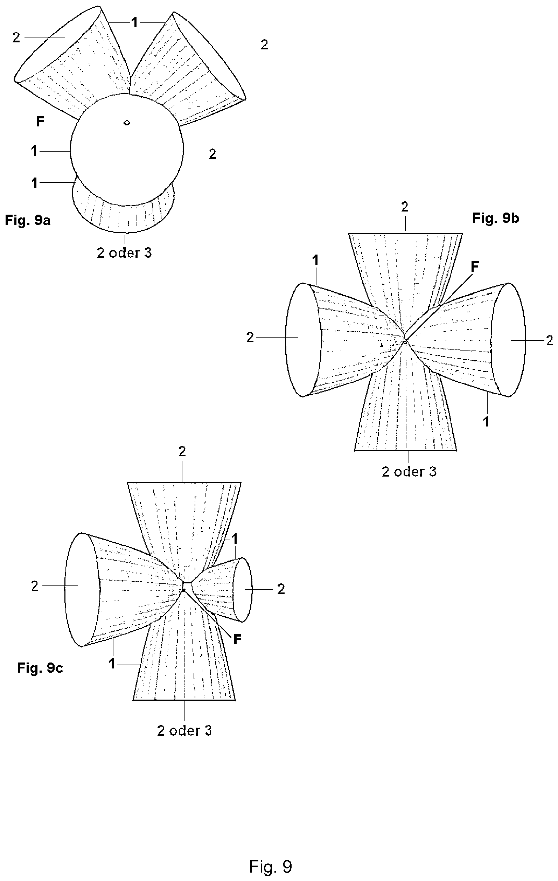

Fig. 9a bis 9c: zeigt mehrere Varianten mit vier Paraboloiden {1} in unterschiedlichen Größen, drei Schlagflächen {2} und einer Schallaustrittsöffnung {3}. Diese kann auch als weitere Schlagfläche {2} ausgebildet sein. Der gemeinsame Brennpunkt ist mit {F} dargestellt.

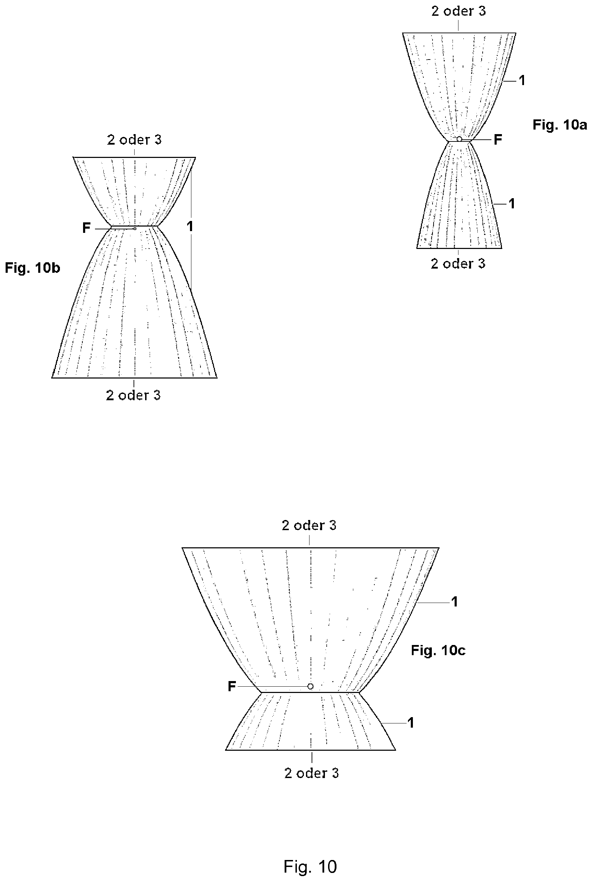

Fig. 10a bis 10c: zeigt mehrere Varianten mit zwei Paraboloiden {1} in unterschiedlichen Größen, einer Schlagfläche {2} und einer Schallaustrittsöffnung {3}. Diese kann auch als weitere Schlagfläche {2} ausgebildet sein. Der gemeinsame Brennpunkt ist mit {F} dargestellt.
Fig. 11a und 11b: zeigt exemplarisch verschiedene gekrümmte Flächen, welche ebenfalls als Schlagfläche {2} verwendet werden können.
Fig. 12a: zeigt exemplarisch die einzelnen Ringe eines möglichen Verfahrens zur Herstellung eines paraboloiden Klangkörpers nach Patentanspruch 5. Diese werden dann zur gezeigten Endform Fig. 12b zusammengefügt.
Fig. 13b: zeigt exemplarisch eine Möglichkeit zum Zerlegen einer geeigneten Form, und Fig. 13a wie sie platzsparend zusammengesteckt werden kann.

### Bezugszeichenliste

F Brennpunkt
1 Resonanzkörper
2 Schlagfläche
3 Schallaustritt
4 Lautsprecher, Schallquelle
5 Mikrofon

### Weg(e) zur Ausführung der Erfindung

### Weg zur Ausführung der Erfindung

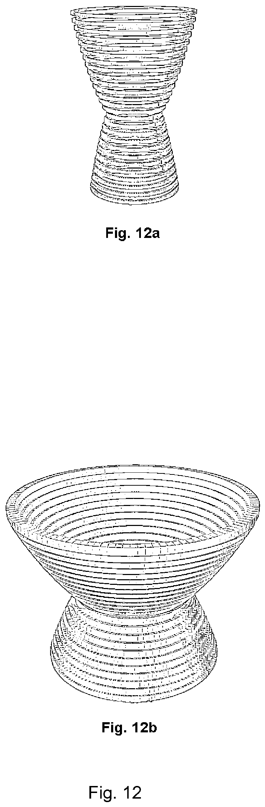

Ein mögliches Verfahren zur Herstellung eines Schlaginstruments nach einem der Ansprüche 1bis3 bei geeigneten Formen wird durch Erzeugung von Ringen aus Plattenmaterial mit an die herzustellende Paraboloidform angepasstem Durchmesser realisiert. Nach dem Erzeugen der Ringe werden diese durch Zusammenfügen zur Endform verbunden. Eine Darstellung dieses Verfahrens ist in Fig. 12a und 12b aufgezeigt.

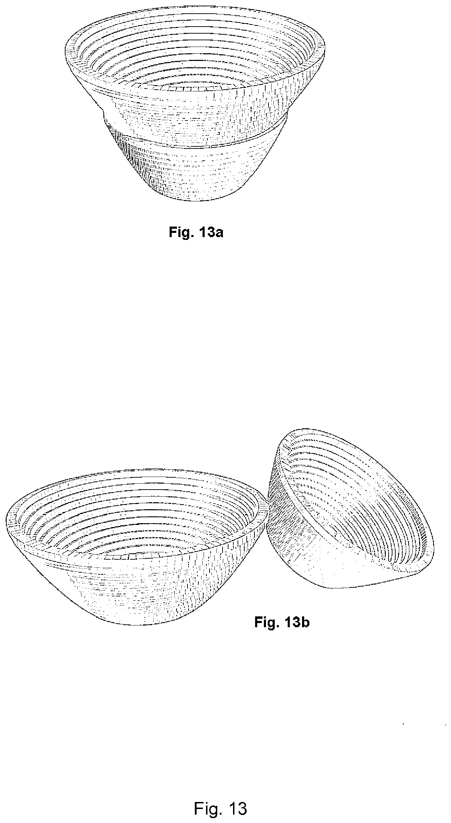

Bei geeigneten Formen ist es zum Zwecke des Transportes oder der Aufbewahrung vorteilhaft, wenn die einzelnen Klangkörper {1} zerlegbar gestaltet werden. Durch die Formähnlichkeit der Paraboloiden können diese in einander gesteckt werden, so daß ein geringerer Platzbedarf entsteht. Eine Darstellung ist in Fig. 13a und 13b aufgezeigt. Die Klangkörper können dann, sofern sie eine Schlagfläche {2} besitzen, auch separat als eigenständiges Instrument bespielt werden. Die Anbringung verschiedener Zusatzeinrichtungen nach Patentanspruch 3 wird dadurch ebenfalls erleichtert.

## Patentansprüche

1. Paraboloides Schlaginstrument, mit mindestens einer Schlagfläche (2) und mehreren Resonanzkörpern,
**dadurch gekennzeichnet,**
**dass** die Resonanzkörper an ihrer Innenseite die räumliche Form elliptischer Paraboloiden (1) beschreiben, welche sich in ihren jeweiligen Brennpunkten (F) räumlich treffen.

2. Schlaginstrument nach Patentanspruch 1,
**dadurch gekennzeichnet,**
**dass** die Paraboloiden (1) verschledene Größen aufweisen, wobei mehrere derart geformte Resonanzkörper vorgesehen sind.

3. Schlaginstrument nach Patentanspruch 1,
**dadurch gekennzeichnet,**
**dass** im jeweiligen Brennpunkt (F) zusätzlich Schallaufnahme- oder Schallabgabeeinrichtungen (5, 4) platziert sind.

4. Schlaginstrument nach Patentanspruch 1,
**dadurch gekennzeichnet,**
**dass** die mindestens eine Schlagfläche (2) eine gekrümmte räumliche Fläche ist.

5. Verfahren zur Herstellung eines Schlaginstruments nach einem der Patentansprüche 1 bis 3, mit folgenden Schritten:
- Erzeugung von Ringen aus Plattenmaterial mit an die herzustellende Paraboloidform angepasstem Durchmesser, ud
- Herstellung der Resonanzkörper durch Zusammenfügen der Ringe zur Endform, und
- Anordnung der Resonanzkörper, so dass sich die Brennpunkte (F) der Paraboloide räumlich treffen,

6. Schlaginstrument nach einem der Patentansprüche 1 bis 3,
**dadurch gekennzeichnet,**
**dass** die Resonanzkörper voneinander trennbar ausgebildet sind.

## Claims

1. A paraboloidal percussion instrument having at least one face (2) and multiple resonating bodies,
**characterized in that**
the resonating bodies on their inner side describe the spatial form of elliptical paraboloids (1) which spatially coincide in their respective focal points (F).

2. The percussion instrument of claim 1,
**characterized in that**
the paraboloids (1) have different sizes, there being provided a plurality of resonating bodies shaped **in that** manner.

3. The percussion instrument of claim 1,
**characterized in that**
sound receiving or sound emitting devices (5, 4) are additionally placed in the respective focal point (F).

4. The percussion instrument of claim 1,
**characterized in that**
the at least one face (2) is a curved spatial surface.

5. A method for manufacturing a percussion instrument of any of claims 1 to 3, comprising the steps of:
producing rings of plate material with diameters adapted to the paraboloidal shape to be created and
- creating the resonating bodies by assembling the rings to their final form, and
- arranging the resonating bodies so that the focal points (F) of the paraboloids coincide spatially.

6. The percussion instrument of any of claims 1 to 3,
**characterized in that**
the resonating bodies are designed to be separable from each other.

## Revendications

1. Instrument de percussion paraboloïde, avec au moins une surface de percussion (2) et plusieurs corps de résonance,
**caractérisé en ce que**
les corps de résonance décrivent sur leur face intérieure la forme spatiale de paraboloïdes elliptiques (1) qui se rencontrent spatialement en leurs foyers respectifs (F).

2. Instrument de percussion selon la revendication 1,
**caractérisé en ce que**
les paraboloïdes (1) présentent différentes tailles, sachant que plusieurs corps de résonance façonnés de la sorte sont prévus.

3. Instrument de percussion selon la revendication 1,
**caractérisé en ce que**
dans le foyer respectif (F) sont placés en supplément des dispositifs de captage acoustique ou d'émission acoustique (5, 4).

4. Instrument de percussion selon la revendication 1,
**caractérisé en ce**
**qu'**au moins l'une des surfaces de percussion (2) est une surface spatiale courbe.

5. Procédé en vue de la fabrication d'un instrument de percussion selon une quelconque des revendications 1 à 3, avec les étapes suivantes :
- production d'anneaux en matière stratifiée avec un diamètre adapté à la forme paraboloïde à fabriquer, et
- fabrication des corps de résonance par assemblage des anneaux en la forme définitive, et
- disposition des corps de résonance de sorte que les foyers (F) des paraboloïdes se rencontrent spatialement.

6. Instrument de percussion selon une quelconque des revendications 1 à 3,
**caractérisé en ce que**
les corps de résonance sont constitués de manière séparable les uns des autres.
